# EUROPEAN PATENT APPLICATION

(11) **EP 3 103 978 A1**
(43) Date of publication of application: **14.12.2016**
(21) Application number: 15171173.6
(22) Date of filing: 09.06.2015
(51) Int. Cl.: F01N 3/20, F01N 3/28, F01N 5/02, F01N 9/00, F01N 3/10

(54) **A SELECTIVE CATALYTIC REDUCTION SYSTEM**

(71) Applicant: Perkins Engines Company Limited, Cambridgeshire PE1 5FQ (GB)
(72) Inventor: Rutledge, John, Peterborough, PE1 5FQ (GB); Shead, Leo, Stamford, Lincolnshire PE9 1FE (GB)
(74) Representative: Boult Wade Tennant

(57) **Abstract**

This disclosure provides a selective catalytic reduction (SCR) system (11) configured to optimise its NOx conversion efficiency. The SCR system (11) comprises a reductant injector (43) for injecting reductant fluid into the exhaust gas, the reductant fluid comprising or being capable of forming ammonia. An SCR catalyst (44) is located downstream of the reductant injector (43) and a heat transfer arrangement (45) is located at or upstream of the SCR catalyst (44). A controller is configured to operate the heat transfer arrangement (45) to maintain the temperature (80) of the SCR catalyst (44) at or below a predetermined upper temperature (88). The predetermined upper temperature (88) is selected based upon the temperature (80) of the SCR catalyst (44) required to maintain the amount of ammonia adsorbed by the SCR catalyst (44) above an ammonia coverage lower limit.

## Description

### Technical Field

This disclosure is directed towards a selective catalytic reduction (SCR) system comprising a heat transfer arrangement located at or upstream of an SCR catalyst and configured to optimise the conversion efficiency of the SCR catalyst. The disclosure is further directed towards an engine system including an SCR system having a heat transfer arrangement therein and a waste heat recovery (WHR) system. The WHR system is configured to recover heat from the heat transfer arrangement and convert it into useful work.

### Background

Engine systems commonly include an aftertreatment module for removing unwanted gaseous emissions or pollutants from the exhaust gas stream of an internal combustion engine. The aftertreatment module may comprise an SCR system for reducing the amount of nitrogen oxides (NOx) in the exhaust gas to a predetermined level. An SCR system is based upon the NOx contacting an SCR catalyst in the presence of a reductant, commonly provided as a reductant fluid including aqueous urea, and reduces the NOx to form nitrogen and water. The reductant fluid is supplied via a reductant injector located upstream of the SCR catalyst and is adsorbed as a reductant onto the surface of the SCR catalyst. This reductant adsorbed by the SCR catalyst subsequently reacts with the NOx.

The percentage of the NOx in the exhaust gas that the SCR system removes is known as the conversion efficiency. For example, an SCR system operating at 90% conversion efficiency will reduce the NOx mass flow in the exhaust gas stream by 90%. The conversion efficiency is, for a particular SCR catalyst, increased by increasing the volume of reductant present and by increasing the temperature at which the reduction of NOx occurs. The latter increases the rate of the reducing reaction, thus improving conversion efficiency as exhaust gas contacts the SCR catalyst.

However, if more reductant fluid is supplied to the SCR catalyst than can be used to reduce the NOx present then the reductant fluid may pass straight through the SCR system and escape to atmosphere. This is known as "ammonia slip" when the reductant comprises ammonia. Ammonia slip is not desirable as it results in higher operating costs by the waste of the reductant fluid, the ammonia has an unpleasant odour and the ammonia can become involved in undesirable chemical reactions, such as by being oxidised to form NOx or N₂O in a process known as "NOx remake". Some regulations require the content of ammonia in exhaust gas exiting engine systems to be no higher than 10 parts per million.

The ammonia storage capacity, being the maximum amount of ammonia the SCR catalyst is capable of storing thereon, reduces with increasing SCR catalyst temperature. A sudden increase in SCR catalyst temperature, for example during a rapid increase in engine load, may therefore reduce the ammonia storage capacity and the SCR catalyst may shed or desorb ammonia. As a result, ammonia slip may increase.

SCR systems are therefore generally designed such that the amount of ammonia stored on the SCR catalyst is always substantially below the ammonia storage capacity to reduce ammonia slip during increases in exhaust gas temperature. Engine systems also commonly comprise an ammonia slip catalyst (ASC) located downstream of the SCR catalyst for converting any wasted ammonia into nitrogen. However, such solutions do not enable the conversion efficiency of the SCR system to be optimised.

### Summary

The present disclosure provides a selective catalytic reduction (SCR) system for reducing NOx in an exhaust gas from an internal combustion engine, the SCR system comprising: a reductant injector for injecting reductant fluid into the exhaust gas, the reductant fluid comprising or being capable of forming ammonia; an SCR catalyst located downstream of the reductant injector and capable of adsorbing the ammonia; a heat transfer arrangement located at or upstream of the SCR catalyst; and a controller configured to: operate the reductant injector to inject reductant fluid into the exhaust gas such that ammonia is adsorbed by the SCR catalyst; operate the heat transfer arrangement to maintain the temperature of the SCR catalyst at or below a predetermined upper temperature. The predetermined upper temperature may be selected based upon the temperature of the SCR catalyst required to maintain the amount of ammonia adsorbed by the SCR catalyst above an ammonia coverage lower limit.

The present disclosure further provides a method of operating a selective catalytic reduction (SCR) system for reducing NOx in an exhaust gas from an internal combustion engine, the SCR system comprising: a reductant injector for injecting reductant fluid into the exhaust gas, the reductant fluid comprising or being capable of forming ammonia; an SCR catalyst located downstream of the reductant injector and capable of adsorbing the ammonia; and a heat transfer arrangement located at or upstream of the SCR catalyst, wherein the method comprises: operating the heat transfer arrangement to maintain the temperature of the SCR catalyst at or below a predetermined upper temperature; and injecting reductant fluid for adsorption onto the SCR catalyst. The predetermined upper temperature may be based upon the temperature of the SCR catalyst required to maintain the amount of ammonia adsorbed by the SCR catalyst above an ammonia coverage lower limit.

The present disclosure further provides an engine system comprising: a selective catalytic reduction (SCR) system for reducing NOx in an exhaust gas from an internal combustion engine, the SCR system comprising a heat transfer arrangement located at or upstream of an SCR catalyst; and a waste heat recovery (WHR) system, the WHR system comprising: an energy conversion machine for providing a power output; and a WHR fluid circuit arranged to transfer a working fluid between the heat transfer arrangement and the energy conversion machine, wherein the working fluid receives heat from the heat transfer arrangement and the heated working fluid drives the energy conversion machine.

The heat transfer arrangement may comprise a heat exchanger for cooling the exhaust gas and the exhaust gas may cool the SCR catalyst. The heat transfer arrangement may be in contact with the SCR catalyst for cooling the SCR catalyst. The WHR fluid circuit comprises a recuperator downstream of the energy conversion machine, the recuperator being arranged to receive working fluid from the energy conversion machine and extract heat therefrom. The WHR fluid circuit may comprise a heat extractor for expelling, to atmosphere, heat extracted from the working fluid. The engine system may further comprise an exhaust gas recirculation (EGR) system. The EGR system may comprise an EGR cooler fluidly connected to the WHR fluid circuit. The EGR cooler may be arranged to direct heat from the recirculated exhaust gas into the working fluid upstream of the energy conversion machine. The working fluid may only be circulated when the exhaust gas temperature is above a lower threshold temperature.

The present disclosure further provides a method of operating an engine system, the engine system comprising: a selective catalytic reduction (SCR) system for reducing NOx in an exhaust gas from an internal combustion engine, the SCR system comprising a heat transfer arrangement located at or upstream of an SCR catalyst; and a waste heat recovery (WHR) system, the WHR system comprising: an energy conversion machine for providing a power output; and a WHR fluid circuit providing communication of a working fluid between the heat transfer arrangement and the energy conversion machine, wherein the method comprises: circulating the working fluid from the heat transfer arrangement, at which the working fluid receives heat, to the energy conversion machine, at which the working fluid drives the energy conversion machine.

The working fluid may only be circulated when the exhaust gas temperature is above a lower threshold temperature.The method may further comprise: operating the heat transfer arrangement to maintain the SCR catalyst at or below a predetermined upper temperature; and injecting reductant fluid into the SCR system to provide an amount of ammonia adsorbed by the SCR catalyst at least at an ammonia coverage lower limit.

By way of example only, embodiments of an SCR system and an engine system are now described with reference to, and as shown in, the accompanying drawings.

### Brief Description of the Drawings

Figure 1 is a schematic of an engine system comprising a first embodiment of an SCR system of the present disclosure;
Figure 2 is a schematic of an engine system comprising a second embodiment of an SCR system and a WHR system of the present disclosure;
Figure 3 is a schematic of an engine system comprising a third embodiment of an SCR system and a WHR system of the present disclosure;
Figure 4A is a graph illustrating an increase and decrease in temperature over time;
Figure 4B is a graph illustrating an ammonia coverage of the SCR system of the present disclosure during the increase and decrease in temperature over time of Figure 4A; and
Figure 4C is a graph illustrating a conversion efficiency of the SCR system of the present disclosure during the increase and decrease in temperature over time of Figure 4A.

### Detailed Description

The present disclosure is generally directed towards an SCR system, WHR system and an engine system comprising the SCR system and/or WHR system. The SCR system may comprise a heat transfer arrangement located at or upstream of an SCR catalyst and configured to maintain the SCR catalyst temperature at or below a predetermined upper SCR catalyst temperature. The heat transfer arrangement may control the SCR catalyst temperature directly or indirectly by controlling the temperature of the exhaust gas contacting the SCR catalyst. The WHR system may comprise a fluid transfer arrangement transferring a working fluid between an energy conversion machine and a heat transfer arrangement of an SCR system. When heat is extracted by the heat transfer arrangement it may be utilised to provide a power output from the energy conversion machine.

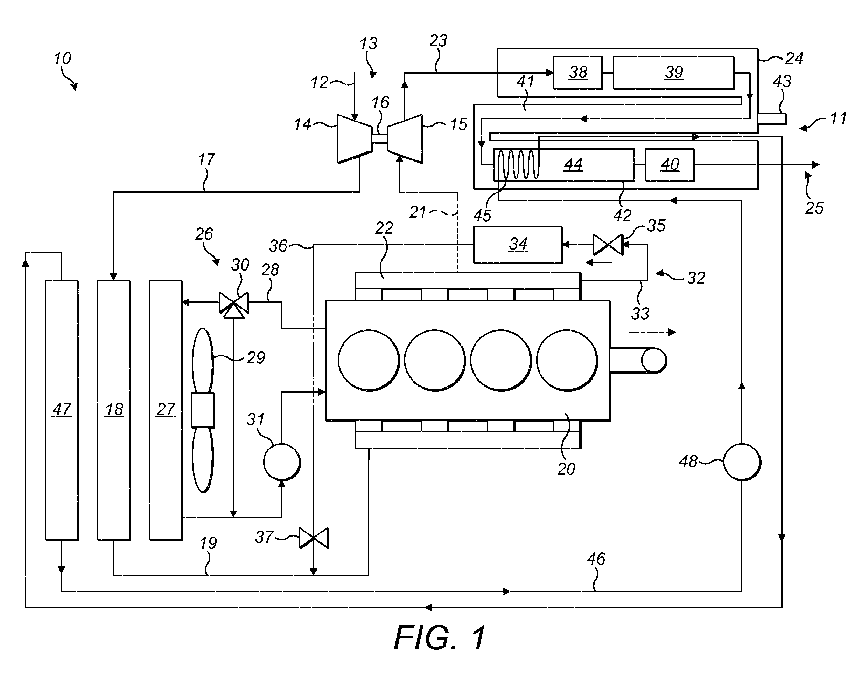

Figure 1 illustrates an exemplary embodiment of an engine system 10 comprising an SCR system 11. The engine system 10 may comprise a first conduit 12 for directing intake gas, such as atmospheric air, to a turbocharger 13. The turbocharger 13 may comprise a turbocharger compressor 14 connected to the first conduit 12 and arranged to be driven by a turbocharger turbine 15 via a shaft 16. The engine system 10 may further comprise a second conduit 17 for directing the intake gas from the turbocharger compressor 14 to an intake gas cooler 18. The engine system 10 may further comprise a two stage turbocharger (not shown in the illustrated embodiment) whereby a second compressor may be between the compressor 14 and the intake gas cooler 18. The second compressor may be driven by a second turbine located between the turbine 15 and the exhaust manifold. The engine system 10 may further comprise a supercharger (not shown in the illustrated embodiment) having a supercharger compressor located between the turbocharger compressor 14 and the intake gas cooler 18. The engine system 10 may further comprise a third conduit 19 for directing the intake gas from the intake gas cooler 18 to an engine 20.

The engine 20 may be an internal combustion engine, such as a compression-ignition or spark-ignition engine. Fuel, such as diesel, petrol or natural gas, may be selectively provided to engine cylinders in the engine 20 to combust with the intake gas and drive the pistons, thereby rotating a crankshaft and providing an engine output torque and power. The by-product of the combustion process is exhaust gas, which may be directed from the engine cylinders along a fourth conduit 21 of the engine system 10 for example, via an exhaust manifold 22. The exhaust gas may comprise unwanted gaseous emissions or pollutants, such as nitrogen oxides (NOx), particulate matter (such as soot), sulphur oxides, carbon monoxide, unburnt hydrocarbons and/or other organic compounds. As is known in the art, the exhaust gas temperature may depend upon, for example, the intake gas temperature, the fuel composition, the fuel injection rates and/or the engine load.

The engine system 10 may comprise an engine cooling arrangement 26 for providing cooling to the engine 20. The engine cooling arrangement 26 may comprise a radiator 27 and an engine cooling fluid circuit 28 for circulating an engine coolant fluid between the engine 20, from which the engine coolant fluid withdraws heat, and the radiator 27, which withdraws the heat from the engine coolant fluid and expels it to atmosphere. A fan 29 or the like may be provided to increase the rate at which the radiator 27 withdraws and expels heat by directing atmospheric air over the radiator 27. The fan 29 may also direct atmospheric air towards the intake gas cooler 18 to increase the rate at which it cools the intake gas. The engine cooling fluid circuit 28 may comprise a three-way valve 30 for enabling the working fluid to selectively bypass the radiator 27 and may comprise an engine coolant pump 31 for circulating the working fluid around the engine cooling fluid circuit 28.

The engine system 10 may further comprise an exhaust gas recirculation (EGR) system 32 for selectively directing exhaust gas back into the engine 20. The EGR system 32 may comprise a first EGR conduit 33 directing exhaust gas from the exhaust manifold 22 or the fourth conduit 21 to an EGR cooler 34. An EGR hot side valve 35 may be located in the first EGR conduit 33 for controlling the flow of exhaust gas along it. The EGR system 32 may comprise a second EGR conduit 36 for directing exhaust gas from the EGR cooler 34 to the third conduit 19 or the intake of the engine 20. An EGR cold side valve 37 may be located in the second EGR conduit 36 for controlling the flow of exhaust gas along it.

The fourth conduit 21 may direct exhaust gas from the engine 20 to drive the turbocharger turbine 15. The engine system 10 may further comprise a fifth conduit 23 for directing exhaust gas from the turbocharger turbine 15 to an exhaust aftertreatment module 24. The exhaust aftertreatment module 24 may direct treated exhaust gas to atmosphere via an exhaust gas outlet 25. The exhaust aftertreatment module 24 may receive and treat the exhaust gas to remove pollutants. The exhaust aftertreatment module 24 may comprise a diesel oxidation catalyst (DOC) 38 connected to the fifth conduit 23, a diesel particulate filter (DPF) 39 downstream of the DOC 38, the SCR system 11 downstream of the DPF 39 and an ammonia slip catalyst (ASC) 40 downstream of the SCR system 11. The ASC 40 may include a substrate coated with a catalyst that oxidizes residual ammonia in the exhaust gas to form water and elemental nitrogen.

The SCR system 11 may comprise an SCR inlet conduit 41 leading from the outlet of the DPF 39 to an SCR catalyst arrangement 42. The SCR system 11 may comprise a reductant injector 43 located in the SCR inlet conduit 41 for selectively injecting reductant fluid into the SCR inlet conduit 41 upstream of the SCR catalyst arrangement 42. The reductant fluid may comprise or may be capable of forming a reductant, particularly ammonia, and comprise aqueous urea, aqueous ammonia or the like. In particular, the reductant fluid may be diesel exhaust fluid (DEF) and the DEF may meet the ISO22241 standard and comprise from 31.8% to 33.2% urea by weight. The high exhaust gas temperature may cause the reductant fluid to evaporate and the SCR system 11 may comprise a mixer (not shown) for promoting even distribution and conversion of the reductant fluid in the exhaust gas prior to entry into the SCR catalyst arrangement 42.

The SCR catalyst arrangement 42 may comprise an SCR catalyst 44 for facilitating the reduction of NOx in the presence of oxygen, from the exhaust gas, and ammonia, from the reductant fluid, into nitrogen and water. The SCR catalyst may comprise zeolites, vanadium or the like. The SCR catalyst arrangement 42 may comprise a substrate on which the SCR catalyst 44 is located. The substrate may be formed as any suitable arrangement and may, for example, be a rectangular lattice structure of axial channels.

The SCR system 11 may further comprise a heat transfer arrangement 45 for controlling the temperature of the SCR catalyst 44. The heat transfer arrangement 45 may directly control the temperature of the SCR catalyst 44 and, as illustrated in Figure 1, the heat transfer arrangement 45 may be in contact with the SCR catalyst 44. The heat transfer arrangement 45 may be connected to a heat transfer fluid circuit 46 for circulating a working fluid between the heat transfer arrangement 45 at the SCR catalyst 44, from which the working fluid extracts heat, and a radiator 47, which draws heat from the working fluid. The fan 29 may direct atmospheric air over the radiator 47 to increase the rate at which it draws heat from the working fluid. A pump 48 may be located in the heat transfer fluid circuit 46 for driving the working fluid around the heat transfer fluid circuit 46.

The heat transfer arrangement 45 may comprise a series of internal and interconnected passageways embedded within the SCR catalyst 44 along which the working fluid may flow. Alternatively, the heat transfer arrangement 45 may be integrated with an outer shell or housing of the SCR catalyst arrangement 42, for example by external conduits or the like wrapped around the SCR catalyst 44. Alternatively, the heat transfer arrangement 45 may at least partially form the substrate upon which the SCR catalyst 44 is located. In particular, the heat transfer arrangement 45 may form the substrate as a heat exchanger and the SCR catalyst 44 may be coated over the heat exchanger. The substrate may comprise a first portion formed by the heat exchanger with the SCR catalyst 44 coated thereon. The substrate may comprise a second portion downstream of the first portion and the second portion may not include the heat transfer arrangement 45. The benefit of such an arrangement is that by integrating the heat transfer arrangement 45 and the SCR catalyst 44, the overall length of the SCR system 11 may be reduced.

The heat transfer arrangement 45 may also be operable to increase the temperature of the SCR catalyst 44. For example, a heater may be provided to heat the working fluid in heat transfer fluid circuit 46 for providing heat through the heat transfer arrangement 45. Alternatively, the heat transfer arrangement 45 may comprise a heating element located within the SCR catalyst 44 to enable the SCR catalyst to be heated. The heating element may comprise metal conducting elements through which an electric current is selectively passed.

The engine system 10 may further comprise at least one sensor arranged to sense one or more parameters relating to one or more of the components of the engine system 10 and send signals relating thereto to a controller (not shown). In particular, the engine system 10 may comprise one or more temperature sensor(s) in communication with the controller for determining the exhaust gas temperature at the outlet of the engine 20 and/or in the exhaust aftertreatment module 24. In particular, a temperature sensor may be located in the SCR system 11 for determining the exhaust gas temperature upon contact with the SCR catalyst 44. The controller may be able to determine the exhaust gas temperature in any way known in the art, for example via engine maps or algorithms based upon the intake gas temperature and the engine load.

The controller may also be in communication with one or more actuators for controlling the operation of the engine system 10. In particular, the controller may be operable to control the turbocharger 13, the rate of fuel injection to the engine 20, the EGR inlet and outlet valves 35, 37, the engine coolant pump 31, the three-way valve 30, the pump 48, the heat transfer fluid circuit 46 and the injection of the reductant fluid by the reductant injector 43. The controller may be a computer and may be operable to store and implement one or more computer programs and may comprise at least one memory, at least one processing unit and at least one communication means. The one or more computer programs may comprise instructions for operating the components of the engine system 10 based upon engine maps, algorithms and/or outputs from the at least one sensor. The controller may be an engine controller (ECU).

The controller memory may store at least one parameter associated with the SCR system 11 and SCR catalyst arrangement 42. A parameter may be an ammonia storage capacity, which may be the maximum amount of ammonia the surface of the SCR catalyst 44 is capable of adsorbing and storing and is inversely dependent upon the temperature of the SCR catalyst 44. The ammonia storage capacity may be determined for an SCR catalyst 44 by, for example, experimentation based upon determining the amount of ammonia that can be provided to the SCR catalyst 44 before ammonia slip begins over a range of temperatures. The controller may store look-up tables for determining the ammonia storage capacity based upon conditions of the engine system 10, such as the amount of NOx entering the SCR system 11, the NO₂/NOx ratio, the exhaust gas temperature, the SCR catalyst temperature and the mass flow rate through the SCR system 11. The amount of ammonia stored on the SCR catalyst as a fraction of the ammonia storage capacity may be referred to as the ammonia coverage.

A parameter may be a lower threshold temperature, which may be the temperature of the SCR catalyst 44 (particularly its surface temperature) above which the SCR system 11 can effectively reduce NOx. The lower threshold temperature may be the temperature at which the reductant fluid hydrolyses to form the reductant for adsorption by the SCR catalyst 44. The lower threshold temperature may be the temperature at which the SCR system 11 operates above a threshold conversion efficiency, which may be in the range of approximately 80% to 90%. The lower threshold temperature may be in the range of approximately 180°C to 200°C.

A parameter may be a degradation temperature, which may be the temperature of the SCR catalyst 44 above which it degrades. Such degradation may be a result of catalytic poisoning, thermal aging and/or thermal sintering. In typical SCR systems 11, the degradation temperature is approximately 400°C. Prior art engine systems are known in which the exhaust gas temperature is controlled below an upper temperature, such as around 500°C to maintain the SCR catalyst temperature below the degradation temperature. For example, US-A-2012/0144804 and US-B-6871489 disclose the provision of a heat exchanger upstream of the SCR system to control the upper exhaust gas temperature to be below that at which the SCR catalyst starts to degrade.

A parameter may be a predetermined upper temperature, which may be a temperature of the SCR catalyst 44 (particularly its surface temperature) between the lower threshold temperature and substantially below the degradation temperature. The predetermined upper temperature may be selected to maintain the amount of ammonia adsorbed by the SCR catalyst 44 above an ammonia coverage lower limit. The predetermined upper temperature may be based upon ensuring that the amount of ammonia stored on the SCR catalyst 44 after the temperature has dropped below the predetermined upper temperature is such that a desired NOx conversion efficiency is maintained. The predetermined upper temperature may thus be selected such that, if during a typical engine operating cycle the temperature of the SCR catalyst is increased above the predetermined upper temperature, an increase in the rate of NOx reduction resulting from said temperature increase is less than a decrease in the rate of NOx reduction over the same cycle at later intervals having lower temperatures of SCR catalyst 44 resulting from the reduced availability of reductant due to desorption of ammonia from the SCR catalyst due to the aforementioned temperature increase. The reduction in ammonia coverage by desorption would result from a reduction in the ammonia storage capacity due to the temperature increase, which would also cause ammonia slip. The predetermined upper temperature may be selected such that the conversion efficiency of the SCR system 11 when the SCR catalyst 44 is at the predetermined upper temperature is at least 98%.

The predetermined upper temperature may be selected based upon an optimisation between an increasing SCR catalyst 44 temperature providing a higher rate of NOx conversion and a decreasing SCR catalyst temperature enabling the amount of ammonia stored on the SCR catalyst 44 to be maximised to provide more NOx conversion. The predetermined upper temperature may be determined by experimentation and/or computer modelling for a particular SCR catalyst 44 and engine system 10. In particular, the predetermined upper temperature may depend upon the type of catalyst material, reductant fluid, SCR catalyst arrangement 42 and the like. The predetermined upper temperature may in the range of approximately 225°C to approximately 275°C and may be approximately 250°C.

The predetermined upper temperature may be set to achieve an ammonia coverage lower limit which achieves a desired conversion efficiency of up to 100%, or at least 98%, whilst keeping below a preset ammonia slip limit. The preset ammonia slip limit may be set by regulations and may be, for example, 10 parts of ammonia per million parts of exhaust gases exiting the SCR system 11. The ammonia coverage lower limit may not be stored in the controller. The ammonia coverage lower limit may be representative of the amount of ammonia on the SCR catalyst 44 which achieves the desired conversion efficiency after the temperature of the SCR catalyst 44 has fallen below the predetermined upper temperature. The predetermined upper temperature, ammonia coverage lower limit and desired conversion efficiency are discussed in further detail below.

During operation of the engine system 10 the engine 20 may produce exhaust gas. The controller may not operate the SCR system 11 when the temperature of the SCR catalyst 44 is below the lower threshold temperature, such as during low engine loads or during start-up of the engine 20. The controller may operate the heat transfer arrangement 45 to increase the temperature of the SCR catalyst 44 when it is below the lower threshold temperature. Once the lower threshold temperature is reached the controller may operate the reductant injector 43 to inject reductant fluid into the SCR system 11. The controller may only determine that the lower threshold temperature has been reached indirectly, for example by determining the temperature of the exhaust gas and estimating the temperature of the SCR catalyst 44. The ammonia may be adsorbed by the SCR catalyst 44 and stored thereon. The ammonia from the reductant fluid may react with oxygen and NOx in the exhaust gas when in contact with the SCR catalyst 44 and the NOx may be reduced to nitrogen and water.

The heat transfer arrangement 45 may be configured to maintain the SCR catalyst 44 temperature at or below the predetermined upper temperature. The controller may operate the heat transfer fluid circuit 46 to circulate working fluid between the heat transfer arrangement 45 at the SCR catalyst 44 and the radiator 47 to control the SCR catalyst 44 temperature at or below the predetermined upper temperature. For example, the controller may control the pump 48 and/or fan 29 to control the rate of heat extraction by the working fluid from the SCR catalyst 44 via the heat transfer arrangement 45. The controller may estimate the temperature of the SCR catalyst 44 based upon the exhaust gas temperature, the temperature of the working fluid or the like.

Therefore the SCR system 11 may only be operated (by virtue of the injection of reductant fluid) when the SCR catalyst 44 temperature is between the lower threshold temperature and the predetermined upper temperature. The controller may inject sufficient reductant fluid from the reductant injector 43 that the amount of ammonia stored on the SCR catalyst 44 at least reaches the ammonia coverage lower limit to obtain the desired conversion efficiency.

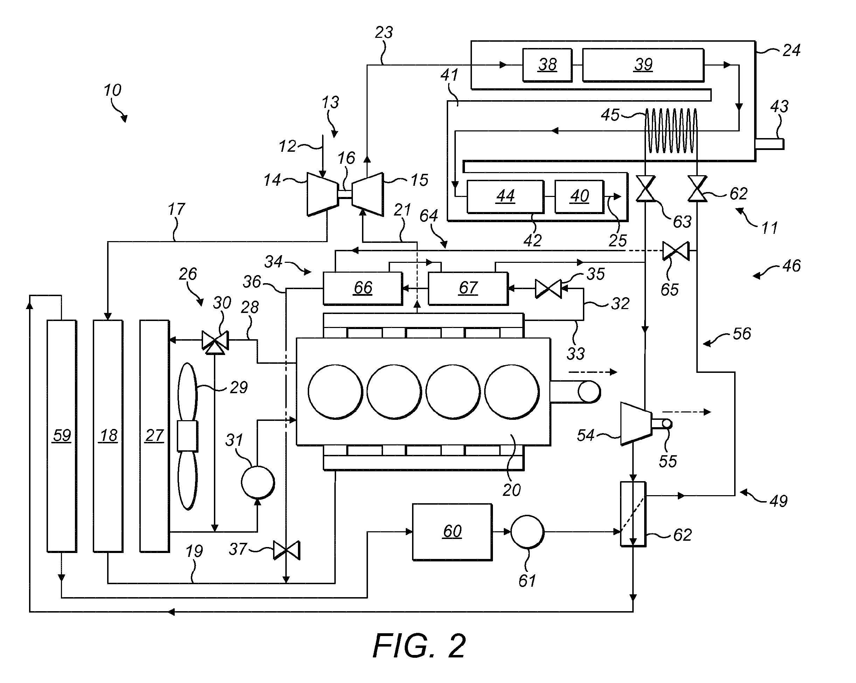

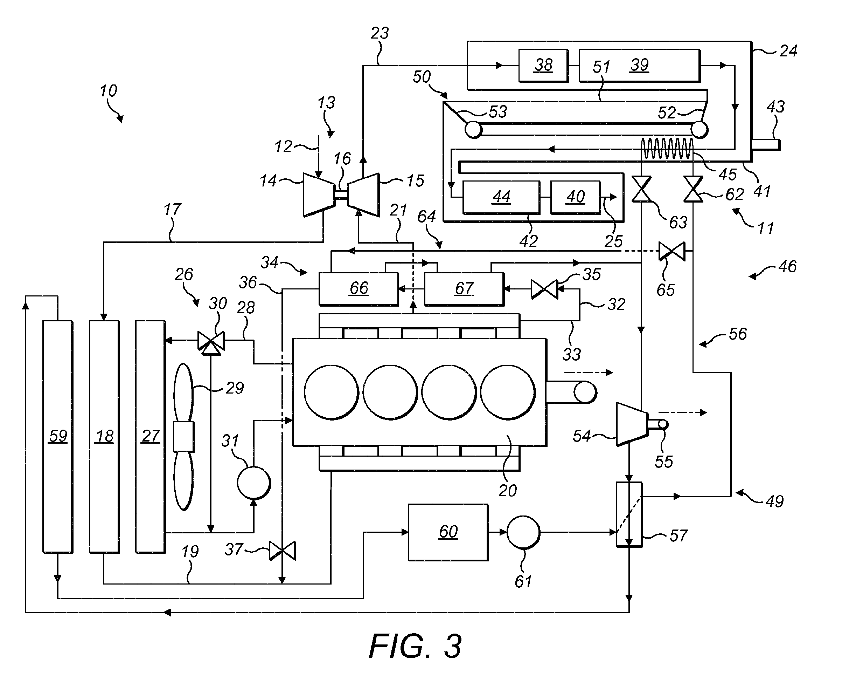

In further embodiments, as illustrated in Figures 2 and 3, the heat transfer arrangement 45 may be located upstream of the SCR catalyst 44 and may be arranged to directly control the exhaust gas temperature prior to its contact with the SCR catalyst 44. The exhaust gas transfers heat to/from the SCR catalyst 44 and, therefore, the temperature of the SCR catalyst 44 may be indirectly controlled by the heat transfer arrangement 45. As illustrated in Figure 2, the heat transfer arrangement 45 may be located in the SCR inlet conduit 41 and may comprise a heat exchanger. Alternatively, the heat transfer arrangement 45 may comprise any other suitable device for withdrawing heat from the exhaust gas, such as a cooling element or a phase change heat storage device.

The heat transfer arrangement 45 may be connected to a heat transfer fluid circuit 46 for circulating working fluid through the heat transfer arrangement 45 such that it extracts heat from the exhaust gas. As is illustrated in Figure 2 and described in further detail below, the heat transfer fluid circuit 46 may comprise a waste heat recovery (WHR) system 49. However, the heat transfer fluid circuit 46 may alternatively be the same as that described in respect of Figure 1.

The heat transfer arrangement 45 may be located adjacent to the SCR catalyst arrangement 42 such that the temperature of the exhaust gas is controlled immediately prior to its contact with the SCR catalyst 44. Alternatively, the heat transfer arrangement 45 may be separated from the SCR catalyst arrangement 42 such that the packaging of the SCR catalyst arrangement 42 and heat transfer arrangement 45 may be shorter.

The heat transfer arrangement 45 may be located downstream of the reductant injector 43. Such an arrangement enables the temperature of the reductant injector 43 to be increased relatively quickly and thereby ensures that it can operate effectively as early as possible during engine warm-up. Furthermore, the heat transfer arrangement 45 may be designed to operate as a mixer for promoting even distribution and conversion of the reductant fluid in the exhaust gas. This may improve the uniformity of the concentration of the reductant upon contact with the SCR catalyst 44, thereby ensuring that the contact is over as much of the surface area of the SCR catalyst 44 as possible. Furthermore, by acting as a mixer it may reduce the formation by the reductant fluid of solid deposits of intermediate chemical compounds in the SCR system 11.

The heat transfer arrangement 45 may also be at least partially coated in a hydrolysis catalyst material. Therefore, if the reductant fluid comprises liquid urea, the hydrolysis catalyst material may decompose the urea into ammonia gas. Such a coating may be particularly suitable if the heat transfer arrangement 45 comprises a heat exchanger. The use of a hydrolysis catalyst material may result in a reduction in the lower threshold temperature as it may reduce the temperature at which the reductant fluid hydrolyses. For example, the lower threshold temperature may be reduced to 150°C. A suitable hydrolysis catalyst material may be titanium dioxide.

During operation, the SCR system 11 may only be operated, by injecting reductant fluid from the reductant injector 43, once the SCR catalyst 44 has reached the lower threshold temperature. The heat transfer arrangement 45 may be operated to control the temperature of the exhaust gas prior to its contact with the SCR catalyst 44 to control the temperature of the SCR catalyst 44. In particular, the controller may operate the heat transfer fluid circuit 46 to circulate working fluid through the heat transfer arrangement 45 upstream of the SCR catalyst 44 to control the exhaust gas temperature. The controller may be operable to determine the SCR catalyst 44 temperature, for example by communication with an SCR catalyst 44 temperature sensor or by utilising engine maps and/or algorithms to derive the SCR catalyst 44 temperature based upon the exhaust gas temperature. Thus the controller may control the exhaust gas temperature to ensure that the SCR catalyst 44 temperature is maintained at or below the predetermined upper temperature. The controller may inject sufficient reductant fluid from the reductant injector 43 that the amount of ammonia stored on the SCR catalyst 44 is at least equal to the ammonia coverage lower limit.

Figure 3 illustrates a further embodiment in which the SCR system 11 further comprises a bypass arrangement 50 for selectively bypassing the heat transfer arrangement 45. The heat transfer arrangement 45 may be the same as that described in respect of Figure 2 and is thus directed at controlling the temperature of the exhaust gas. The bypass arrangement 50 may comprise a bypass conduit 51 arranged to bypass the portion of the SCR inlet conduit 41 in which the heat transfer arrangement 45 is located. The flow of exhaust gases through the bypass conduit 51 and heat transfer arrangement 45 may be controlled by one or more valves. As illustrated, the bypass arrangement 50 may comprise an inlet valve 52 and an outlet valve 53 located at the inlet and outlet of the bypass conduit 51. The inlet and outlet valves 52, 53 may be operable to either close the bypass conduit 51 or to close the portion of the SCR inlet conduit 41 in which the heat transfer arrangement 45 is located.

During operation the controller may operate the bypass arrangement 50 such that the exhaust gas is directed through the bypass conduit 51 when the exhaust gas temperature is low, and particularly when it is resulting in an SCR catalyst 44 temperature below the lower threshold temperature. Therefore, any cooling effects of the heat transfer arrangement 45 on the exhaust gas can be avoided when higher exhaust gas temperatures are required. Furthermore, the controller may operate the bypass arrangement 50 such that the exhaust gas is directed through the bypass conduit 51 when the exhaust gas temperature is very high. This may be during after-treatment service procedures, such as during regeneration of the DPF via high exhaust gas temperatures. Therefore, any potential effects to the heat transfer arrangement 45 may be avoided during such procedures.

In embodiments, such as those illustrated in Figures 2 and 3, a WHR system 49 may form the heat transfer fluid circuit 46. The WHR system 49 may be incorporated in any suitable engine system 10, such as those comprising cooling arrangements for preventing the exhaust gas temperature exceeding the upper limit at which the SCR catalyst 44 may be degraded. The WHR system 49 may comprise an energy conversion machine 54 for providing a power output based upon a heat input and, in particular, may be based upon an organic Rankine cycle. The energy conversion machine 54 may be an expander or expansion device and may be a turbine, piston type arrangement or the like. The power output, which may be in the form of a rotatable output shaft 55, may be directed to ancillary systems to/of the engine system 10, such as pumps, fans (including fan 29), alternators, electrified ancillaries of an electrical system or the like. The power output may also be used to directly assist the engine crank output through a motor or through direct mechanical linkage. The WHR system 49 may further comprise a WHR fluid circuit 56 arranged to transfer a working fluid between the heat transfer arrangement 45 and the energy conversion machine 54. The working fluid may receive heat from the heat transfer arrangement 45 (and may evaporate therein) and the heated working fluid may drive the energy conversion machine 54.

Subsequently, the WHR fluid circuit 56 may direct the working fluid through a heat extractor 59 before returning it to the heat transfer arrangement 45. In particular the WHR fluid circuit 56 may direct working fluid from the energy conversion machine 54, through a recuperator 57 and to the heat extractor 59. The heat extractor 59 may be in the form of a condenser or radiator and the fan 29 may provide an atmospheric air flow over the heat extractor 59 to increase the rate at which it draws heat from the working fluid. The WHR fluid circuit 56 may further comprise a reservoir 60 of working fluid and a pump 61 downstream of the heat extractor 59 for driving the working fluid around the WHR fluid circuit 56. The WHR fluid circuit 56 directs fluid from the pump 61, through the recuperator 57 and back to the heat transfer arrangement 45.

The recuperator 57 may be for extracting low grade heat from the working fluid in the WHR fluid circuit 56 downstream of the energy conversion machine 54 and transfer it to the working fluid upstream of the heat transfer arrangement 45. Thus the working fluid is preheated by a relatively small temperature prior to its entry into the heat transfer arrangement 45.

The WHR system 49 may further comprise at least one valve, controlled by the controller, in the WHR fluid circuit 56 for controlling the flow of working fluid between the heat transfer arrangement 45 and the energy conversion machine 54. In particular, the WHR system 49 may comprise a first valve 62 located upstream of the heat transfer arrangement 45 and a second valve 63 located downstream of the heat transfer arrangement 45.

The WHR system 49 may also be connected to the EGR system 32. The working fluid of the WHR fluid circuit 56 may be directed through the EGR cooler 34 where it receives heat from the recirculated exhaust gas. The working fluid may subsequently be directed to the energy conversion machine 54 for providing a power output. In particular, an EGR fluid circuit 64 may selectively direct working fluid from the WHR fluid circuit 56 downstream of the recuperator 57 and upstream if the heat transfer arrangement 45. A third valve 65 may be provided at the inlet to the EGR fluid circuit 64 for controlling the flow of working fluid therethrough. The EGR fluid circuit 64 may direct the working fluid through the EGR cooler 34 back to the WHR fluid circuit 56 downstream of the heat transfer arrangement 45 and upstream of the energy conversion machine 54. The EGR cooler 34 may comprise a boiler 66 upstream of a super heater 67 to evaporate and superheat the working fluid prior to its entry into the energy conversion machine 54. In other arrangements the WHR system 49 may be indirectly coupled to the EGR system 32 by means of an intermediate working fluid and heat exchanger. As a result, different working fluids may be optimally used in the WHR system 49 and EGR system 32. In particular, an optimal working fluid may be used in the WHR system 49 without the need to ensure it will not thermally degrade in the relatively high temperatures of the EGR system 32.

During operation of the engine system 10, the heat transfer arrangement 45 may be operated to extract heat from the exhaust gas and/or the SCR catalyst 44. In particular, the first and second valves 62, 63 may be opened and the working fluid may be driven around the WHR fluid circuit 56 by the pump 61. The working fluid may evaporate in the heat transfer arrangement 45. The working fluid may expand as it passes through the energy conversion machine 54, which provides a power output by virtue of the output shaft 55. The working fluid may subsequently be condensed in the recuperator 57 prior to being cooled further in the heat extractor 59. The pump 61 drives working fluid from the reservoir 60 and through the recuperator 57 where it is preheated. The working fluid is then returned to the heat transfer arrangement 45. The controller may also operate the EGR system 32 by opening the EGR hot side valve 35, the EGR cold side valve 37 and the third valve 65. As a result, working fluid may be directed from the recuperator 57, through the EGR cooler 34 where it evaporates and is superheated and back to the energy conversion machine 54 to provide a further power output.

Various other arrangements of the WHR system 49 may be implemented. For example, an intermediate fluid circuit with an intermediate working fluid may be provided between the heat transfer arrangement 45 and a fluid circuit with a WHR working fluid and including the energy conversion machine 54 and recuperator 57. The intermediate working fluid may be at a higher temperature than the WHR working fluid. In this manner, the WHR working fluid may be optimally selected for the organic Rankine cycle and the intermediate working fluid may be optimally selected for the high temperatures to which it may be exposed in the heat transfer arrangement 45. Such an arrangement is particularly suitable when the optimal WHR working fluid degrades above a threshold temperature.

### Industrial Applicability

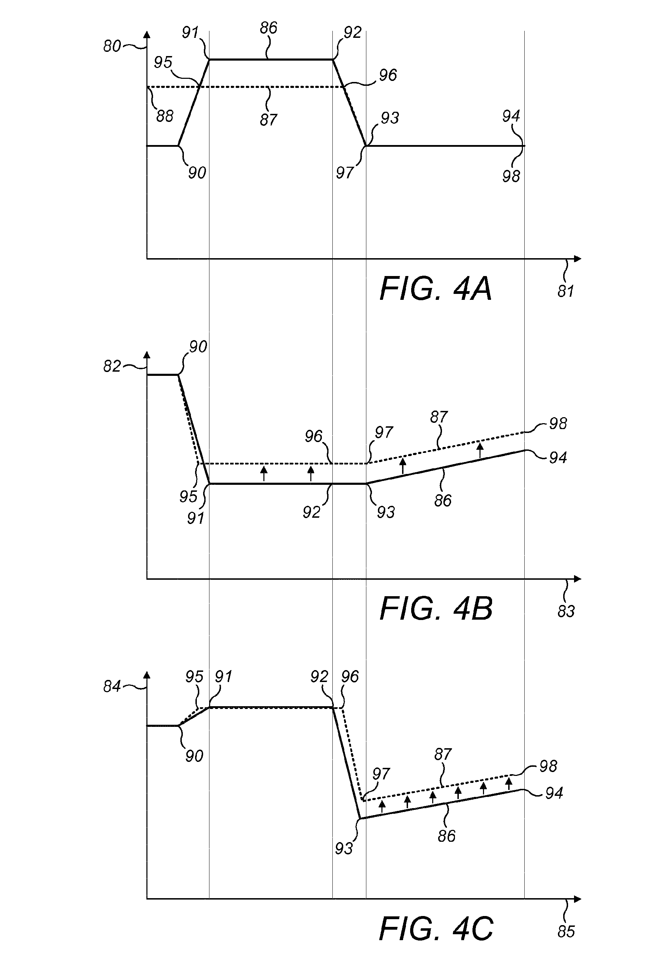

Figures 4A to 4C may illustrate the effect of maintaining the temperature of the SCR catalyst 44 at or below the predetermined upper temperature. In Figure 4A the Y-axis may represent the temperature 80 of the SCR catalyst 44 and the X-axis may represent time 81. In Figure 4B the Y-axis may represent the ammonia coverage 82 (i.e. the amount of ammonia) stored on the SCR catalyst 44 and the X-axis may represent time 83. In Figure 4C the Y-axis may represent the conversion efficiency 84 of the SCR system 11 and the X-axis may represent time 85. In Figures 4A to 4C the first line 86, joining points 90, 91, 92, 93, 94, may represent the temperature 80, ammonia coverage 82, and conversion efficiency 84 during an increase and subsequent decrease in temperature 80 over time when the temperature 80 is not maintained at or below the predetermined upper temperature 88. The second line 87, joining points 90, 95, 96, 97, 98, may represent the temperature 80, ammonia coverage 82, and conversion efficiency 84 during a corresponding increase and subsequent decrease in temperature 80 over time when the temperature 80 is maintained at or below the predetermined upper temperature 88. The increase in the temperature 80 of the SCR catalyst 44 may be due to an increase in the exhaust gas temperature, such as during an increase in engine load.

During the uncontrolled increase in temperature 80 of the first line 86 from point 90 to point 91, the ammonia coverage 82 may drop to a relatively low minimum ammonia coverage in line with points 91, 92 and 93 in Figure 4B. This drop in ammonia coverage 82 may be due to a reduction in the ammonia storage capacity of the SCR catalyst 44 due to the temperature increase, which may result in the desorption of ammonia via ammonia slip. However, the conversion efficiency 84 may increase due to the relatively higher temperatures. After the temperature 80 drops after point 92, the conversion efficiency 84 of the SCR system 11 falls due to the relatively low temperatures and levels of ammonia stored on the SCR catalyst 44. Once the temperature 80 has fallen below a certain level the SCR catalyst 44 may again start to adsorb injected reductant fluid. Therefore, whilst the temperature 80 remains steady from point 93 to point 94 of Figure 4A, the ammonia coverage 82 may increase from point 93 to point 94 of Figure 4B. Therefore, the conversion efficiency 84 may increase from point 93 to 94 of Figure 4C.

However, if the temperature 80 of the SCR catalyst 44 is maintained at or below the predetermined upper temperature 88, as per second line 87, the ammonia coverage 82 does not drop below the ammonia coverage lower limit between points 95, 96 and 97 of Figure 4B. This ammonia coverage lower limit is above the minimum ammonia coverage at point 91 of first line 86 when the temperature of the SCR catalyst 44 is uncontrolled. Therefore, when the temperature 80 drops again, the ammonia coverage 82 of the second line 87 is higher than that of first line 86. As illustrated in Figure 4C, the conversion efficiency 84 is thereby maintained above a desired conversion efficiency at point 97 of second line 87 in Figure 4C. This desired (i.e. minimum) conversion efficiency is above the minimum conversion efficiency, at point 93 of the first line 86, achieved by not controlling the temperature of the SCR catalyst 44.

The predetermined upper temperature 88 may thus be selected such that the desired conversion efficiency and ammonia coverage lower limit are greater than the minimum conversion efficiency and minimum ammonia coverage achieved if the temperature 80 of the SCR catalyst is increased above the predetermined upper temperature 88. Thus, as discussed above, the predetermined upper temperature 88 may be determined based upon experimentation with a certain engine system 10 and stored in the controller. The controller need not store the desired conversion efficiency and ammonia coverage lower limit.

Furthermore, when the temperature 80 increases from point 90, the amount of ammonia desorbed from the SCR catalyst will be relatively less when the temperature 80 is maintained at or below the predetermined upper temperature 88. This may be illustrated by the ammonia coverage lower limit at point 95 of second line 87 being higher than the minimum ammonia coverage at point 91 of first line 86. Therefore, the wastage of reductant fluid, an unpleasant odour and NOx remake are avoided by the SCR system 11 of the present disclosure.

In addition, the maximum ammonia coverage, at point 90 in Figure 4B, may be constrained in order to maintain the ammonia slip below the preset ammonia slip. In prior art systems the maximum ammonia coverage may need to be kept lower such that the ammonia slip between point 90 and 91 of the first line 86 is kept below the present ammonia slip. However, as the ammonia slip between point 90 and 95 of the second line 87 is lower, the maximum ammonia coverage may be relatively higher (this is not shown in Figure 4B). As a result, the starting conversion efficiency at point 90 of the second line 87 in Figure 4C may be relatively higher.

The conversion efficiency of the SCR system 11 may thus be improved. In particular, compared to prior art systems, at low and medium temperatures the conversion efficiency may be improved as the amount of ammonia stored on the SCR catalyst 44 may be kept relatively higher.

The use of the WHR system 49 enables thermal energy taken from the exhaust gases in the SCR and EGR systems 11, 32 to be converted into useful work by the energy conversion machine 54. As a result, the overall efficiency of the engine system 10 is improved.

## Claims

1. A selective catalytic reduction (SCR) system (11) for reducing NOx in an exhaust gas from an internal combustion engine (20), the SCR system (11) comprising:
a reductant injector (43) for injecting reductant fluid into the exhaust gas, the reductant fluid comprising or being capable of forming ammonia;
an SCR catalyst (44) located downstream of the reductant injector (43) and capable of adsorbing the ammonia;
a heat transfer arrangement (45) located at or upstream of the SCR catalyst (44); and
a controller configured to:
operate the reductant injector (43) to inject reductant fluid into the exhaust gas such that ammonia is adsorbed by the SCR catalyst (44);
operate the heat transfer arrangement (45) to maintain the temperature (80) of the SCR catalyst (44) at or below a predetermined upper temperature (88), the predetermined upper temperature (88) being selected based upon the temperature (80) of the SCR catalyst (44) required to maintain the amount of ammonia adsorbed by the SCR catalyst (44) above an ammonia coverage lower limit.

2. An SCR system (11) as claimed in claim 1 wherein the predetermined upper temperature (88) is selected to achieve an ammonia coverage lower limit which maintains a NOx conversion efficiency (84) of the SCR system (11) above a desired NOx conversion efficiency when the temperature (80) of the SCR catalyst (44) is below the predetermined upper temperature (88).

3. An SCR system (11) as claimed in any one of the preceding claims wherein the heat transfer arrangement (45) is located downstream of the reductant injector (43).

4. An SCR system (11) as claimed in any one of the preceding claims wherein the heat transfer arrangement (45) is located upstream of the SCR catalyst (44) and is arranged to control the temperature of the exhaust gas.

5. An SCR system (11) as claimed in claim 4 wherein the heat transfer arrangement (45) comprises a cooling element, a heat exchanger or a phase change heat storage device.

6. An SCR system (11) as claimed in claim 5 wherein the reductant fluid comprises urea and the heat transfer arrangement (45) is at least partially coated in a hydrolysis catalyst material for decomposing the urea into ammonia gas.

7. An SCR system (11) as claimed in claim 5 or claim 6 wherein the heat transfer arrangement (45) comprises a heat exchanger located adjacent to the SCR catalyst (44).

8. An SCR system (11) as claimed in any one of claims 4 to 6 further comprising a bypass arrangement (50) for selectively bypassing the heat transfer arrangement (45).

9. An SCR system (11) as claimed in any one of claims 1 to 3 wherein the heat transfer arrangement (45) is in contact with the SCR catalyst (44) for controlling the temperature of the SCR catalyst (44).

10. An SCR system (11) as claimed in claim 9 wherein the heat transfer arrangement (45) comprises at least one passageway for working fluid embedded in the SCR catalyst (44).

11. An SCR system (11) as claimed in claim 9 wherein the SCR catalyst (44) is at least partially located on a substrate and the heat transfer arrangement (45) at least partially forms the substrate.

12. An SCR system (11) as claimed in claim 11 wherein the substrate comprises a heat exchanger and the SCR catalyst (44) is at least partially located as a coating on the heat exchanger.

13. A method of operating a selective catalytic reduction (SCR) system (11) for reducing NOx in an exhaust gas from an internal combustion engine, the SCR system (11) comprising:
a reductant injector (43) for injecting reductant fluid into the exhaust gas, the reductant fluid comprising or being capable of forming ammonia;
an SCR catalyst (44) located downstream of the reductant injector (43) and capable of adsorbing the ammonia; and
a heat transfer arrangement (45) located at or upstream of the SCR catalyst (44), wherein the method comprises:
operating the heat transfer arrangement (45) to maintain the temperature of the SCR catalyst (44) at or below a predetermined upper temperature (88), the predetermined upper temperature (88) being based upon the temperature (80) of the SCR catalyst (44) required to maintain the amount of ammonia adsorbed by the SCR catalyst (44) above an ammonia coverage lower limit; and
injecting reductant fluid for adsorption onto the SCR catalyst (44).

14. A method as claimed in claim 13 wherein the predetermined upper temperature (88) is selected to achieve an ammonia coverage lower limit which maintains a NOx conversion efficiency (84) of the SCR system (11) above a desired NOx conversion efficiency when the temperature (80) of the SCR catalyst (44) is below the predetermined upper temperature (88).

15. A method as claimed in claim 13 or claim 14 wherein the SCR system (11) further comprises a bypass arrangement (50) for selectively bypassing the heat transfer arrangement (45) and wherein the method further comprises operating the bypass arrangement (50) such that exhaust gas bypasses the heat transfer arrangement (45) when the exhaust gas temperature is below a lower threshold temperature.
